# EUROPÄISCHE PATENTSCHRIFT

(11) **EP 3 464 754 B1**
(45) Veröffentlichungstag und Bekanntmachung des Hinweises auf die Patenterteilung: **02.11.2022**
(21) Anmeldenummer: 17726599.8
(22) Anmeldetag: 23.05.2017
(51) Int. Cl.: E04H 12/12, B66C 23/20, F03D 13/10, F03D 13/20, E04H 12/34, B66C 23/18

(54) **STEIGVORRICHTUNG ZUR AUSFÜHRUNG EINER BEWEGUNG RELATIV ZU EINEM TURM UND VERFAHREN ZUR HERSTELLUNG EINES TURMS**
CLIMBING DEVICE FOR CARRYING OUT A MOVEMENT RELATIVE TO A TOWER AND METHOD FOR PRODUCING A TOWER
DISPOSITIF DE MONTÉE POUR LA RÉALISATION D'UN MOUVEMENT PAR RAPPORT À UN MÂT ET PROCÉDÉ DE FABRICATION D'UN MÂT

(30) Priorität: 27.05.2016 DE 102016109818
(43) Veröffentlichungstag der Anmeldung: 10.04.2019
(73) Patentinhaber: Wobben Properties GmbH, 26607 Aurich (DE)
(72) Erfinder: KNOOP, Frank, 26607 Aurich (DE)
(74) Vertreter: Eisenführ Speiser
(86) Internationale Anmeldenummer: PCT/EP2017/062408
(87) Internationale Veröffentlichungsnummer: WO 2017/202841

(56) Entgegenhaltungen:
- EP-A2- 2 746 571
- WO-A1-03/069099
- WO-A1-2015/114573
- WO-A2-2010/049313
- JP-A- H1 182 285

## Beschreibung

Die Erfindung betrifft eine Steigvorrichtung zur Ausführung einer Bewegung relativ zu einem Turm und ein Verfahren zur Herstellung eines Turms.

Türme werden in verschiedenen Anwendungsbereichen eingesetzt und sind beispielsweise als Fernsehtürme, Fernmeldetürme, Schornsteine oder Türme für Windenergieanlagen ausgebildet. Türme der eingangs genannten Art sind in der Regel schlanke Bauwerke, die vorzugsweise eine große Höhe aufweisen und ferner vorzugsweise orthogonal zu dieser Höhe vergleichsweise geringe Abmessungen aufweisen. Türme bestehen vorzugsweise im Wesentlichen aus Beton und/oder Stahl oder umfassen diese Materialien. Die Bandbreite der Ausführungen für Türme reicht von Gitterkonstruktionen über Stahlrohrtürme mit oder ohne Seilabspannung bis hin zu Betonbauten, die als massive Konstruktionen ausgebildet und/oder aus einzelnen Segmenten zusammengesetzt sein können. Gitterkonstruktionen stellen in der Regel hohe und steife Turmkonstruktionen bereit, wobei die ästhetische Wirkung derartiger Gittertürme in der Regel als gering eingeschätzt.

Stahlrohrtürme werden oft eingesetzt, wobei Stahlrohrtürme in der Regel aus einem einzelnen Bauteil oder mehreren Bauteilen bestehen oder derartige Bauteile umfassen. Stahlrohrtürme können als abgespannte Türme bereitgestellt werden, die zusätzliche Seile, Drähte oder Stützen aufweisen, die den Stahlrohrturm in einer oder mehrere Richtungen abstützen. Ferner besteht die Möglichkeit, freitragende Stahlrohrtürme vorzusehen, die in der Regel keine Abspannung aufweisen.

Darüber hinaus werden oft Betonbauweisen für Türme vorgesehen. Solche Betontürme werden entweder als schlaffe, das heißt mit einer üblichen Stahlbewehrung versehene Türme realisiert, oder es werden vorgespannte Spannbetontürme eingesetzt. Aufgrund des hohen Gewichts von Betontürmen werden diese entweder an einem Aufstellort gegossen oder der Turm wird aus einzelnen Segmenten zusammengesetzt, wobei die einzelnen Segmente vorgefertigt sein können.

Türme können zylindrische und/oder konische Abschnitte, insbesondere entlang ihrer Längserstreckung, aufweisen, wobei Türme oftmals zylindrische und konische Anteile umfassen. Auch mehr- oder vieleckige Querschnitte, wie beispielsweise polygonale Querschnitte, können für Türme eingesetzt werden. Eine Herausforderung ist es, die teilweise schweren Segmentbauteile von einem Produktionsstandort zu einem Aufstellort des Turmes zu transportieren. Einzelne, beispielsweise ringförmige oder teilringförmige, Segmentbauteile eines Turmes können beispielsweise Einzelteilgewichte von ca. 30 Tonnen bis 50 Tonnen aufweisen. Für den Transport derartiger Segmentbauteile sind in der Regel Schwertransporte notwendig, die häufig mit hohen Kosten verbunden sind. Ferner sind Schwertransporte in der Regel zeitlich unflexibel, da in vielen Regionen/ Ländern gewisse, meist zeitbezogene, Fahrverbote bestehen.

Darüber hinaus kann die Handhabung derartig schwerer Segmentbauteile vor Ort beim Aufbau eines Turmes unvorteilhaft sein. Insbesondere bei widrigen Wetterverhältnissen wird der Aufbau eines Turmes häufig gestoppt, wenn derartig schwere Segmentbauteile verbaut werden, da diese schweren Segmentbauteile häufig eine große Windangriffsfläche aufweisen und der Wind somit ein Segmentbauteil mit einer schwierig einzuschätzenden Kraft beaufschlagen kann. Darüber hinaus ist das erforderliche präzise Setzen der Segmentbauteile aneinander häufig mit Schwierigkeiten verbunden. Insbesondere die Anordnung von schweren Segmentbauteilen in einer Höhe von über 50 Metern, insbesondere von über 75 Metern und insbesondere auch von über 100 Metern ist in Bezug auf einen notwendigen Kran eine Herausforderung, insbesondere in Bezug auf ein sicheres und/oder kostengünstiges und/oder präzises Setzen der Segmentbauteile.

Kräne für die Montage von Türmen weisen vorzugsweise eine große Auskragweite auf und zeichnen sich darüber hinaus trotz der hohen Auskragweite durch eine ausreichende Stabilität aus. Derartige Kräne sind zwar verfügbar, sind jedoch häufig mit hohen Kosten verbunden. Die existierenden Vorrichtungen und Verfahren zum Betrieb solcher Vorrichtungen bieten verschiedene Vorteile, jedoch sind weitere Verbesserungen wünschenswert.

EP 1 861 564 B1 offenbart ein Verfahren zum Aufbau eines Turms mittels einer Innen vertikal verschieblichen Arbeitsbühne. Die WO 2010/049313 A2 und die JPH1182285 beschreiben ein Verfahren zum Aufbau eines Turmes. Die EP 2 746 571 A2 beschreibt ein System zur Montage einer Windenergieanlage. Die WO 03/069099 A1 beschreibt eine Windenergieanlage mit einem Turm aus vorgefertigten Wandelementen. WO 2015/114573 beschreibt ein weiteres Verfahren zum Aufbau eines Turms aus Teilringsegmenten.

Es ist daher eine Aufgabe der vorliegenden Erfindung, eine Lösung vorzuschlagen, welche ein oder mehrere der genannten Nachteile verringert oder beseitigt. Insbesondere ist es eine Aufgabe der vorliegenden Erfindung, eine Lösung vorzuschlagen, welche eine schnelle und/oder sichere und/oder präzise und/oder kostengünstige Montage eines Turmes bereitstellt. Ferner ist es eine Aufgabe der vorliegenden Erfindung, eine Lösung vorzuschlagen, welche die Komplexität eines Turmaufbaus reduziert.

Die Aufgabe wird erfindungsgemäß gelöst durch eine Steigvorrichtung zur Ausführung einer Bewegung relativ zu einem Turm nach Anspruch 1 und einem Verfahren zur Herstellung eines Turms nach Anspruch 12.

Die Erfindung beruht unter anderem auf der Erkenntnis, dass Türme, insbesondere von Windenergieanlagen, immer größere Turmhöhen erreichen. Dies ist insbesondere durch die stetig steigende Nabenhöhe und/oder durch den stetig steigenden Rotordurchmesser zu begründen. Durch diese immer weiter steigenden Turmhöhen ist eine Lösung wünschenswert, die langfristig eine schnelle und/oder sichere und/oder präzise und/oder kostengünstige Montage von Türmen gewährleistet. Es ist absehbar und auch heute schon teilweise der Fall, dass mit konventionellen Kranvorrichtungen kein oder nur ein lediglich stark erschwerter Aufbau von Türmen, insbesondere von Türmen für Windenergieanlagen, möglich ist. Die Erfindung beruht ferner auf der Erkenntnis, dass eine Steigvorrichtung in bzw. an bzw. auf einem Turm vorgesehen werden kann, die einen , insbesondere wirtschaftlich, vorteilhaften Aufbau eines Turmes auch bei sehr hohen Turmhöhen ermöglicht.

Die Steigvorrichtung ist vorzugsweise ausgebildet, im Inneren eines Turmes angeordnet zu werden, und im Inneren eines Turmes eine Bewegung relativ zu diesem Turm auszuführen. Die Steigvorrichtung kann somit vorzugsweise im Inneren eines Turmes kontinuierlich oder sukzessive aufsteigen. Die Steigvorrichtung umfasst den Grundkörper mit der Längserstreckung, wobei die Längserstreckung im Betriebszustand, das heißt die Steigvorrichtung ist an bzw. im bzw. auf einem Turm angeordnet, im Wesentlichen parallel zu einer Längserstreckung des Turmes ausgerichtet ist. Die Längserstreckung und/oder die Turmhöhe eines Turmes erstreckt sich insbesondere von einem Fundament, welches bodennah angeordnet ist, zu einer Turmspitze. Die Längserstreckung des Grundkörpers erstreckt sich ferner zwischen dem ersten Ende und dem zweiten Ende, wobei die Steigvorrichtung im Betriebszustand derart an dem Turm angeordnet ist, dass das zweite Ende dem Fundament zugewandt ist. Das erste Ende ist dem Fundament abgewandt und zeigt insbesondere in eine der Erdoberfläche abgewandte Richtung.

Ferner umfasst die Steigvorrichtung mindestens ein erstes Steigelement mit der Erstreckung zwischen dem ersten inneren Ende und dem ersten Halteende. Vorzugsweise ist das mindestens eine erste Steigelement an dem Grundkörper beweglich angeordnet. Ferner vorzugsweise ist das innere Ende des ersten Steigelements innerhalb des Grundkörpers angeordnet. Das mindestens eine zweite Steigelement erstreckt sich von einem zweiten inneren Ende zu einem zweiten

Halteende, wobei das zweite innere Ende vorzugsweise innerhalb des Grundkörpers der Steigvorrichtung angeordnet ist.

Das erste Steigelement ist angeordnet und ausgebildet, eine erste Haltebewegung des ersten Halteendes relativ zum Grundkörper auszuführen. Das erste Halteende bewegt sich vorzugsweise zwischen einer Warteposition und einer Halteposition. Die Warteposition des ersten Halteendes ist vorzugsweise innerhalb des Grundkörpers, in einer Wandung des Grundkörpers und/oder in einem Bereich angrenzend an den Grundkörper. Die Halteposition des ersten Halteendes ist vorzugsweise stets weiter beabstandet von dem Grundkörper als eine der zuvor genannten Wartepositionen. Die Haltebewegung des ersten Halteendes umfasst eine erste Haltebewegungsrichtung, welche orthogonal zur Längserstreckung ausgerichtet ist. Das heißt, dass die Haltebewegung einen Bewegungsanteil besitzt, der in orthogonaler Richtung zur Längserstreckung der Steigvorrichtung ausgerichtet ist. Ferner kann die Haltebewegung einen weiteren Bewegungsanteil umfassen, der in Längsrichtung ausgerichtet ist.

Die Halteposition des ersten Halteendes ist vorzugsweise derart ausgebildet, dass das erste Halteende und/oder das erste Steigelement in dieser Position innerhalb oder außerhalb eines Turmes eine Verbindung mit dem Turm eingehen kann. Insbesondere ist es bevorzugt, dass diese Verbindung durch einen Formschluss erfolgt, wobei dieser beispielsweise durch einen Absatz des Turmes mit einem horizontalen Flächenanteil, auf dem das erste Steigelement sich abstützen kann, gewährleistet wird. Ferner ist es bevorzugt, dass die Verbindung durch einen Kraftschluss, beispielsweise über eine Reibkraft und/oder eine Haftkraft und/oder eine Saugkraft, gewährleistet wird. Vorzugsweise ist die Verbindung zwischen Steigelement und Turm lösbar gestaltet. Insbesondere realisiert die Verbindung vertikal wirkende Kräfte, insbesondere in Richtung der Turmspitze, so dass die Gewichtskräfte und gegebenenfalls weitere Kräfte, beispielsweise durch das Aufsteigen, der Steigvorrichtung aufgenommen werden können.

Das erste Steigelement ist ferner angeordnet und ausgebildet, die erste Steigbewegung auszuführen. Sobald durch die Haltebewegung des ersten Halteendes des ersten Steigelements eine Verbindung zwischen dem ersten Steigelement und einem Turm ausgebildet wurde, und eine Abstützung des Steigelements an dem Turm gewährleistet ist, kann die erste Steigbewegung einsetzen. Die Steigbewegung erfolgt insbesondere zur Bewegung der Steigvorrichtung und/oder des Grundkörpers relativ zu dem Turm. Diese Bewegung erfolgt indem das erste Halteende relativ zum Grundkörper mit einem Bewegungsrichtungsanteil, der parallel zur Längserstreckung des Grundkörpers und/oder des Turmes ausgerichtet ist, bewegt wird. Zum Ansteigen in Richtung der Turmspitze bewegt sich das erste Halteende in Richtung des zweiten Endes des Grundkörpers. Zum Absenken in Richtung des Turmfundaments bewegt sich das erste Halteende in Richtung des ersten Endes des Grundkörpers.

Das zweite Steigelement ist ebenfalls angeordnet und ausgebildet, um eine zweite Haltebewegung und eine zweite Steigbewegung auszuführen. Die Bewegungsbahnen und/oder Bewegungsgeschwindigkeiten und/oder Bewegungsbeschleunigungen sind vorzugsweise analog zum ersten Steigelement ausgebildet. Nachdem das erste Steigelement eine Haltebewegung ausgeführt hat und somit die Steigvorrichtung an einem Turm abstützt und sich anschließend durch die erste Steigbewegung relativ zu einem Turm bewegt hat, kann das zweite Steigelement ebenfalls eine zweite Haltebewegung des zweiten Halteendes ausführen und sich ebenfalls an einem vorzugsweise weiteren Abschnitt des Turmes abstützen und somit eine Verbindung mit dem Turm eingehen. Im Anschluss daran führt das zweite Steigelement vorzugsweise eine zweite Steigbewegung, insbesondere zur Bewegung der Steigvorrichtung und/oder des Grundkörpers relativ zu einem Turm, des zweiten Halteendes relativ zum Grundkörper aus, sodass die Steigvorrichtung und/oder der Grundkörper in eine Richtung bewegt wird. Vorzugsweise ist diese Richtung, die durch die zweite Steigbewegung realisiert wird, die gleiche Richtung wie die Richtung, die durch die erste Steigbewegung realisiert wird. Somit besteht die Möglichkeit, dass die Steigvorrichtung innerhalb eines Turmes aufsteigt.

Vorzugsweise führt das erste Steigelement eine Haltebewegung in Richtung der Warteposition aus, sobald das zweite Steigelement eine Verbindung mit dem Turm aufweist, also in der Halteposition ist, und/oder die zweite Steigbewegung ausgeführt wird. Ferner vorzugsweise führt das zweite Steigelement eine zweite Haltebewegung in Richtung der Warteposition von der Halteposition aus, während das erste Steigelement eine erste Steigbewegung ausführt. Durch das Einfahren des gerade nicht abstützenden Steigelements von einer Halteposition in eine Warteposition wird in der Regel gewährleistet, dass das gerade nicht abstützende Steigelement den Bewegungsvorgang nicht blockiert. Ferner ist wird das gerade nicht aktiv für die Steigbewegung und/oder den Haltevorgang eingesetzte Steigelement somit in eine Ausgangsposition zurückgefahren und kann direkt nach Abschluss der Steigbewegung des anderen Steigelements wieder die Haltebewegung und/oder die Steigbewegung ausführen.

Die Steigbewegungen werden vorzugsweise von einem oberen Umkehrpunkt zu einem unteren Umkehrpunkt ausgeführt. Der obere Umkehrpunkt ist vorzugsweise dem ersten Ende des Grundkörpers zugewandt und der untere Umkehrpunkt ist vorzugsweise dem zweiten Ende des Grundkörpers zugewandt. Bei Beginn der Steigbewegung ist das Steigelement und/oder dessen Halteende vorzugsweise am oberen Umkehrpunkt oder in einem Bereich angrenzend an den oberen Umkehrpunkt angeordnet und führt während der Steigbewegung eine Bewegung vom oberen Umkehrpunkt oder einem Bereich angrenzend an diesen zu dem unteren Umkehrpunkt oder zu einem Bereich angrenzend an diesen aus. Sobald ein Steigelement und/oder dessen Halteende keine abstützende Funktion für die Steigvorrichtung ausführt und das Steigelement und/oder dessen Halteende in einer Warteposition angeordnet ist oder in diese gerade verfährt, verfährt das Steigelement und/oder dessen Halteende vorzugsweise von dem unteren Umkehrpunkt oder einem Bereich angrenzend an diesen zurück zu dem oberen Umkehrpunkt oder einem Bereich angrenzend an diesen, um wieder für eine Steigbewegung vorbereitet zu sein. Durch die Bewegung des Steigelements und/oder dessen Halteende von dem oberen Umkehrpunkt zu dem unteren Umkehrpunkt führt der Grundkörper eine relative Bewegung zum Turm aus, welche im Wesentlichen in Richtung der Längserstreckung des Grundkörpers und/oder des Turms ausgerichtet ist. Durch die Steigbewegung des ersten Steigelements und einer darauf folgenden Steigbewegung des zweiten Steigelements führt die Steigvorrichtung eine relative Bewegung zum Turm aus.

Mit einer derartigen Steigvorrichtung besteht die Möglichkeit, dass die Steigvorrichtung innerhalb eines Turmes oder auch außerhalb eines Turmes aufsteigt und/oder auch wieder herabsteigt und somit eine relative Bewegung zum Turm ausführt. In der Halteposition wird die Steigvorrichtung durch das erste oder das zweite Steigelement in einer definierten Position gehalten. Durch die Steigbewegung des ersten oder zweiten Steigelements und/oder des ersten oder zweiten Halteendes von einem oberen Umkehrpunkt zu einem unteren Umkehrpunkt bewegt sich der Grundkörper der Steigvorrichtung in einer vorzugsweise vertikalen Richtung in Richtung einer Turmspitze und/oder in Richtung, die dem Fundament des Turms abgewandt ist. Durch die anschließende Bewegung des jeweils gerade nicht abstützenden Steigelements in eine Halteposition und einem abermaligen Aufsteigen durch eine Steigbewegung eben dieses Steigelements und/oder dessen Halteende, besteht die Möglichkeit des Aufsteigens der Steigvorrichtung in einem Turm.

Mittels dieser Steigvorrichtung kann vorzugsweise nicht nur die Steigvorrichtung selbst, sondern weitere, insbesondere für die Errichtung und/oder Montage einer Windenergieanlage, insbesondere eines Turms einer Windenergieanlage, erforderliche Elemente, wie beispielsweise Bauteile, Arbeitsmittel, oder auch Personen mit befördert werden. Insbesondere kann die Steigvorrichtung eingesetzt werden, Turmsegmente zu befördern und/oder zu positionieren, insbesondere um den Turm an dem oberen Ende sukzessive aufzubauen. Ferner vorzugsweise kann die Steigvorrichtung eingesetzt werden, um beispielsweise Spannglieder und/oder Spannlitzen im Turm mit nach oben, insbesondere mit in die Turmspitze, zu befördern. Ferner kann die Steigvorrichtung eingesetzt werden, um Personen und/oder Lasten, insbesondere im Bauzustand des Turms, zu befördern, insbesondere in die Höhe der Steigvorrichtung. So können beispielsweise Aufstiegshilfen, Baukörper, Last- und/oder Personenbeförderungskörbe oder ähnliche Transporthilfen zusammen mit der Steigvorrichtung im Turm nach oben steigen und/oder beweglich, insbesondere in vertikaler Richtung beweglich, wobei diese Bewegung versuchsweise auch angetrieben sein kann, an der Steigvorrichtung befestigt sein.

Vorzugsweise ist der untere Umkehrpunkt des mindestens einen ersten Steigelements beabstandet von einem oberen Umkehrpunkt des mindestens einen zweiten Steigelements. Insbesondere ist es bevorzugt, dass die Beabstandung des unteren Umkehrpunktes des mindestens einen ersten Steigelements eine geringere Beabstandung von dem ersten Ende des Grundkörpers aufweist als der obere Umkehrpunkt des mindestens einen zweiten Steigelements. Ferner vorzugsweise ist der obere Umkehrpunkt des mindestens einen ersten Steigelements in einem Bereich angrenzend an das erste Ende angeordnet und der untere Umkehrpunkt des mindestens einen ersten Steigelements ist in einem Bereich angrenzend an das zweite Ende angeordnet. Vorzugsweise ist der obere Umkehrpunkt des mindestens einen zweiten Steigelements in einem Bereich angrenzend an das erste Ende angeordnet und der untere Umkehrpunkt des mindestens einen zweiten Steigelements ist in einem Bereich angrenzend an das zweite Ende angeordnet. Ferner vorzugsweise weist der untere Umkehrpunkt des mindestens einen ersten Steigelements eine größere Beabstandung von dem ersten Ende auf als der obere Umkehrpunkt des mindestens einen zweiten Steigelements.

In einer bevorzugten Ausführungsvariante der Steigvorrichtung ist vorgesehen, dass die Steigvorrichtung zwei oder mehrere erste Steigelemente umfasst, und/oder zwei oder mehrere zweite Steigelemente umfasst. Durch die Anordnung von zwei oder mehreren Steigelementen kann die Stabilität der Steigvorrichtung während des Abstütz- und/oder Steigvorgangs verbessert werden. Insbesondere ist es bevorzugt, dass die Steigvorrichtung drei oder mehrere erste und/oder zweite Steigelemente umfasst, da ab einer Anzahl von drei Steigelementen eine besondere Stabilität der Steigvorrichtung gewährleistet werden kann. Insbesondere besteht dann die Möglichkeit, dass die Steigelemente mit ihren Halteenden jeweils eine kraftschlüssige Verbindung mit einer beispielsweise vertikalen Turmwand bilden, indem deren Kraftrichtung für diese kraftschlüssige Verbindung vollständig oder teilweise entgegengesetzt zueinander ausgerichtet ist. Dies ermöglicht es der Steigvorrichtung insbesondere in nahezu beliebig ausgebildeten Türmen aufzusteigen.

Gemäß einer weiteren besonders bevorzugten Ausführungsvariante der Steigvorrichtung ist vorgesehen, dass das mindestens eine erste Steigelement einen ersten Antriebsbereich angrenzend an das erste innere Ende aufweist, wobei das erste innere Ende vorzugsweise in einem Inneren des Grundkörpers angeordnet ist, und/oder das mindestens eine zweite Steigelement einen zweiten Antriebsbereich angrenzend an das zweite innere Ende aufweist, wobei das zweite innere Ende vorzugsweise im Inneren des Grundkörpers angeordnet ist. Die Antriebsbereiche des mindestens einen ersten Steigelements und/oder des mindestens einen zweiten Steigelements sind vorzugsweise angeordnet und ausgebildet, dass diese mit einem Antrieb gekoppelt werden können. Insbesondere weist mindestens einer der Antriebsbereiche ein Kopplungselement auf, das beispielsweise als Nut und/oder Öffnung und/oder Verzahnung und/oder Rolle und/oder Fläche ausgebildet ist.

Gemäß einer weiteren besonders bevorzugten Ausführungsvariante der Steigvorrichtung ist vorgesehen, dass die Steigvorrichtung mindestens einen Antrieb aufweist, vorzugsweise einen hydraulischen Antrieb und/oder einen elektrischen Antrieb, der angeordnet und ausgebildet ist, das mindestens eine erste Steigelement, vorzugsweise am ersten Antriebsbereich, und/oder das mindestens eine zweite Steigelement, vorzugsweise am zweiten Antriebsbereich, in die Haltebewegungsrichtung und/oder die Steigbewegungsrichtung zu bewegen.

Vorzugsweise bewegt der Antrieb alle Steigelemente der Steigvorrichtung in die Haltebewegungsrichtung und die Steigbewegungsrichtung. In dieser Ausführungsvariante ist vorzugsweise nur ein einzelner Antrieb, beispielsweise ein elektrischer Motor, vorgesehen. In einer weiteren Ausführungsvariante umfasst die Steigvorrichtung zwei, drei oder mehrere Antriebe, die die Steigelemente in die Haltebewegungsrichtung und/oder die Steigbewegungsrichtung bewegen können. Insbesondere ist es bevorzugt, dass die ersten Steigelemente einen ersten Antrieb aufweisen, wobei der erste Antrieb die Steigelemente in die Haltebewegungsrichtung und/oder die Steigbewegungsrichtung bewegen, und die zweiten Steigelemente einen zweiten Antrieb aufweisen, der die zweiten Steigelemente in die Haltebewegungsrichtung und/oder die Steigbewegungsrichtung bewegen. Ferner vorzugsweise umfasst jegliches Steigelement einen einzelnen Antrieb, der das jeweilige Steigelement in die Haltebewegungsrichtung und/oder Steigbewegungsrichtung bewegen. Darüber hinaus vorzugsweise kann jedes Steigelement einen einzelnen Antrieb jeweils für die Steigbewegungsrichtung und die Haltebewegungsrichtung aufweisen.

Gemäß einer weiteren bevorzugten Ausführungsvariante der Steigvorrichtung ist vorgesehen, dass ein Bereich angrenzend an das Halteende des mindestens einen ersten Steigelements und/oder des mindestens einen zweiten Steigelements angeordnet und ausgebildet ist, eine kraft- und/oder formschlüssige Verbindung mit einer, vorzugsweise inneren, Wandung eines Turms zu bilden. Beispielsweise können die Steigelemente eine im Wesentlichen horizontale Ausrichtung haben, mit einer flächigen Erstreckung deren Flächenorthogonale in Richtung der Längserstreckung des Grundkörpers und ferner in Richtung des Fundaments des Turms gerichtet ist. Mit dieser horizontalen Fläche kann das mindestens eine erste Steigelement und/oder das mindestens eine zweite Steigelement beispielsweise mit einem Absatz, der vorzugsweise ebenfalls eine horizontale Fläche und/oder einen horizontalen Richtungsanteil aufweist, eine formschlüssige Verbindung eingehen.

Ferner vorzugsweise weisen die Steigelemente jeweils an dem Halteende eine vertikale Fläche auf, wobei diese vertikale Fläche vorzugsweise ein elastisches Material umfasst, mit welchem sich das Steigelement an einer zumindest teilweisen vertikalen Wandung des Turmes stützen kann. Durch das Abstützen von zwei oder drei Steigelementen, die vorzugsweise gleich verteilt um den Grundkörper angeordnet sind, können Normalkräfte zwischen der vertikalen Fläche des Steigelements und der Wandung eines Turmes ausgebildet werden, sodass durch die Reibkraft an den vertikalen Flächen der Steigvorrichtung und der Wandung eines Turms eine ausreichende Haltekraft in vertikaler Richtung für die Steigvorrichtung bereitgestellt wird.

In einer weiteren bevorzugten Ausführungsvariante der Steigvorrichtung ist vorgesehen, dass das mindestens eine erste Steigelement und/oder das mindestens eine zweite Steigelement an dem Halteende ein U-förmiges Profil aufweist bzw. aufweisen. In einer weiteren Ausführungsvariante der Steigvorrichtung ist vorgesehen, dass das mindestens eine erste Steigelement und/oder das mindestens eine zweite Steigelement wenigstens ein Dämpfungselement umfasst bzw. umfassen.

In einer weiteren besonders bevorzugten Ausführungsvariante der Steigvorrichtung ist vorgesehen, dass die zwei oder mehreren ersten Steigelemente jeweils die gleiche Beabstandung zu einem benachbarten ersten Steigelement in Umfangsrichtung aufweisen, und/oder die zwei oder mehreren zweiten Steigelemente jeweils die gleiche Beabstandung zu einem benachbarten zweiten Steigelement in Umfangsrichtung aufweisen. Die ersten Steigelemente sind in dieser Ausführungsvariante entlang des Umfangs gleich verteilt. Die zweiten Steigelemente sind in dieser Ausführungsvariante entlang des Umfangs gleich verteilt. Bei einem rotationssymmetrischen Grundkörper sind beispielsweise zwei Steigelemente 180 Bogengrad voneinander beabstandet. Drei Steigelemente sind in dieser Ausführungsvariante 120 Bogengrad voneinander beabstandet und vier Steigelemente sind 90 Bogengrad voneinander beabstandet.

In einer weiteren Ausführungsvariante der Steigvorrichtung ist vorgesehen, dass das mindestens eine erste Steigelement und das mindestens eine zweite Steigelement stets eine Beabstandung in Richtung der Längserstreckung aufweisen. In dieser Ausführungsvariante ist insbesondere vorgesehen, dass der untere Umkehrpunkt des ersten Steigelements eine geringere Beabstandung von dem ersten Ende aufweist als der obere Umkehrpunkt des zweiten Steigelements. In einer weiteren Ausführungsvariante der Steigvorrichtung ist vorgesehen, dass die Haltebewegungsrichtung in radialer Richtung zur Längserstreckung ausgerichtet ist.

In einer weiteren besonders bevorzugten Ausführungsvariante der Steigvorrichtung ist vorgesehen, dass das mindestens eine erste Steigelement ausgebildet ist, die erste Steigbewegung und die erste Haltebewegung zeitgleich auszuführen, und/oder das mindestens eine zweite Steigelement ausgebildet ist, die zweite Steigbewegung und die zweite Haltebewegung zeitgleich auszuführen. Diese zeitgleiche Ausführung der Haltebewegung und der Steigbewegung wird vorzugsweise von den Steigelementen ausschließlich dann ausgeführt, wenn diese lediglich passiv eingesetzt sind. Passiv heißt insbesondere, dass diese gerade nicht für die Steigbewegung der Steigvorrichtung und/oder für das Halten der Steigvorrichtung verantwortlich sind. Das zeitgleiche Ausführen einer Steigbewegung und einer Haltebewegung durch das erste und/oder zweite Steigelement ist somit insbesondere vorgesehen, um die Steigelemente wieder in eine Ausgangsposition zurückzubringen. Von der Ausgangsposition kann das Steigelement dann wieder die Haltebewegung und/oder Steigbewegung zum Bewegen des Grundkörpers relativ zu einem Turm ausführen.

Gemäß einer weiteren bevorzugten Ausführungsvariante der Steigvorrichtung ist vorgesehen, dass die Steigvorrichtung, insbesondere der Antrieb, ausgebildet ist, die erste Steigbewegung und/oder die zweite Steigbewegung und/oder die erste Haltebewegung und/oder die zweite Haltebewegung des mindestens einen ersten Steigelements bzw. des mindestens einen zweiten Steigelements bzw. von deren Halteenden jeweils unabhängig voneinander auszuführen. Das unabhängige Ausführen der einzelnen Bewegungen des mindestens einen ersten Steigelements und/oder des mindestens einen zweiten Steigelements und/oder von deren Ende resultiert unter anderem darin, dass die Position der Steigvorrichtung individuell durch die Steigelemente ausgerichtet werden kann. Insbesondere beim Vorsehen einer Steuervorrichtung können somit Unebenheiten innerhalb eines Turms und/oder an Abstützpunkten für die Steigvorrichtung an einem Turm ausgeglichen werden. Ferner vorzugsweise können somit eine begrenzte Anzahl der vorhandenen ersten Steigelemente und/oder eine begrenzte Anzahl der vorhandenen zweiten Steigelemente für eine Steigbewegung eingesetzt werden. Dies kann beispielsweise vorteilhaft sein, wenn für einzelne Steigelemente gerade keine Halteposition an einem Turm vorliegt.

Die Steigvorrichtung umfasst ferner einen Sicherheitsmechanismus, wobei eine Haltebewegung des ersten Steigelements lediglich möglich ist, wenn ein Bereich angrenzend an das Halteende des zweiten Steigelements eine Verbindung mit einer, vorzugsweise inneren, Wandung eines Turms aufweist. Vorzugsweise ist eine Haltebewegung des zweiten Steigelements lediglich möglich, wenn ein Bereich angrenzend an das Halteende des ersten Steigelements eine Verbindung mit einer, vorzugsweise inneren, Wandung eines Turms aufweist. Somit wird vorzugsweise sichergestellt, dass sich die ersten Steigelemente nicht zeitgleich mit den zweiten Steigelementen in einer Warteposition befinden und/oder sich in zu einer Warteposition hinbewegen und sich somit kein Steigelement mehr in einer Halteposition befindet. In dem Fall, dass die Steigelemente jeweils in einer Warteposition sind und/oder sich in zu einer Warteposition hinbewegen, wird die Steigvorrichtung innerhalb des Turmes oder außerhalb des Turmes nicht mehr abgestützt und führt durch die Schwerkraft eine in der Regel unkontrollierte Bewegung in Richtung des Turmfundaments aus.

Gemäß einer weiteren besonders bevorzugten Ausführungsvariante, umfasst die Steigvorrichtung eine Steuervorrichtung, die angeordnet und ausgebildet ist, die Bewegung relativ zu einem Turm, insbesondere einem Windenergieanlagen-Turm, zu steuern und vorzugsweise zu regeln, indem die erste Steigbewegung und/oder die zweite Steigbewegung und/oder die erste Haltebewegung und/oder die zweite Haltebewegung des mindestens einen ersten Steigelements bzw. des mindestens einen zweiten Steigelements, vorzugsweise in Bezug auf die Bewegungsbahn und/oder die Bewegungsgeschwindigkeit und/oder die Bewegungsbeschleunigungen, und ferner vorzugsweise zeitpunktabhängig, bestimmt wird bzw. werden. Die Steuervorrichtung kann somit eine vorzugsweise exakte Ausrichtung der Steigvorrichtung innerhalb eines Turmes und/oder außerhalb eines Turmes steuern und vorzugsweise regeln. Neben einer vorteilhaften Aufsteigebewegung der Steigvorrichtung innerhalb und/oder außerhalb des Turmes, können auch weitere Einflussgrößen durch die Steuervorrichtung berücksichtigt werden. Beispielsweise können unterschiedliche Lastverhältnisse an oder auf der Steigvorrichtung von der Steuervorrichtung berücksichtigt werden, und so verschiedene Ausgleichsbewegungen von der Steuervorrichtung gesteuert werden. In einer weiteren bevorzugten Ausführungsvariante der Steigvorrichtung umfasst diese eine Steuervorrichtung, die angeordnet und ausgebildet ist, den Sicherheitsmechanismus zu steuern und/oder auszuführen und vorzugsweise zu regeln. Ferner vorzugsweise umfasst die Steigvorrichtung eine Steuervorrichtung, die die zuvor genannten Ausführungsvarianten der Steuervorrichtung umfassen.

Gemäß einer weiteren bevorzugten Ausführungsvariante der Steigvorrichtung ist vorgesehen, dass die Steigvorrichtung eine Hebevorrichtung umfasst, wobei die Hebevorrichtung vorzugsweise am ersten Ende des Grundkörpers angeordnet ist. In einer weiteren Ausführungsvariante der Steigvorrichtung ist vorgesehen, dass die Hebevorrichtung als Kran ausgebildet ist, vorzugsweise mit einem in Richtung der Längserstreckung ausgerichteten Trägerelement, und ferner vorzugsweise mit einem drehbar angeordneten Ausleger, welcher an einem der Steigvorrichtung abgewandten Ende des Trägerelements angeordnet ist. Durch das Vorsehen eines Krans und/oder einer Hebevorrichtung an der Steigvorrichtung, kann der Turm sukzessive auch aufgebaut werden, indem der Kran einzelne Teilringsegmente für den Turm in eine Montageposition bringt, diese montiert werden und der Kran mit der Steigvorrichtung im Anschluss an den zuvor montierten Segmenten hinaufsteigt und wiederum im Anschluss weitere Teilringsegmente angeordnet werden können.

Beschrieben wird ferner ein Teilringsegment für einen Turm, insbesondere für einen Turm für eine Windenergieanlage, das als Mantelsegment, vorzugsweise als Betonkörper, vorzugsweise aus Stahl- und/oder Spannbeton, ausgebildet ist und einen Absatz, vorzugsweise mit mindestens einer im Betriebszustand im Wesentlichen horizontalen Fläche, aufweist, der als eine Kraftangriffsfläche für ein Steigelement einer Steigvorrichtung gemäß mindestens einem der im Vorherigen genannten Ausführungsvarianten ausgebildet ist. Das Teilringsegment ist vorzugsweise derart ausgebildet, dass dieses von einer Hebevorrichtung, welche auf einer Steigvorrichtung, insbesondere einer Steigvorrichtung gemäß mindestens einer der im Vorherigen beschriebenen Ausführungsvarianten, angeordnet ist, angehoben werden kann.

In einer bevorzugten Ausführungsvariante des Teilringsegments ist vorgesehen, dass die Abmessungen und/oder das Gewicht des Teilringsegments einen konventionellen Transport, beispielsweise mit einem Lastkraftwagen, ermöglicht. Vorzugsweise ist das Teilringsegment derart ausgebildet, dass für den Transport von einem Produktionsstandort zu einem Aufstellort eines Turmes kein Schwertransport notwendig ist. Ferner bieten die vergleichsweise kompakten Teilringsegmente eine vorteilhafte Möglichkeit der Demontage, beispielsweise nach Ablauf der Turmlebenszeit. Der Absatz weist im Betriebszustand und/oder im montierten Zustand einen Absatz auf, der als Kraftangriffsfläche für ein Steigelement einer Steigvorrichtung ausgebildet ist. Die Kraftangriffsfläche kann im Wesentlichen horizontal, im Wesentlichen vertikal oder vertikale und horizontale Richtungsanteile aufweisen.

Das Teilringsegment ist ferner vorzugsweise derart ausgebildet, dass dieses an einem weiteren Teilringsegment angeordnet und vorzugsweise mit diesem verbunden werden kann. Ferner vorzugsweise bilden sachgerecht aneinander angeordnete Teilringsegmente einen Turm und/oder einen Abschnitt eines Turms aus. Ferner vorzugsweise weisen die Teilringsegmente Nuten und/oder Absätze und/oder Kanten auf, die eine, insbesondere formschlüssige, Verbindung der Teilringsegmente ermöglichen.

Das Teilringsegment kann vorzugsweise eine gewichtsoptimierte, insbesondere gewichtsreduziert Form aufweisen. Beispielsweise kann das Teilringsegment, insbesondere auf einer im Einbauzustand dem Turminneren zugewandten Seite, eine Rippenstruktur mit einer oder mehreren Rippen aufweisen. Solche Rippen können vorzugsweise die Steifigkeit des Teilringsegments erhöhen, was gleichzeitig eine leichtere Bauweise ermöglichen kann. Vorzugsweise kann bzw. können die eine oder mehreren Rippe(n) gleichzeitig als Absatz mit einer Kraftangriffsfläche für ein Steigelement einer Steigvorrichtung dienen.

Das Teilringsegment kann alternativ oder zusätzlich zu einer Stahlbewehrung eine Faser- und/oder Textilbewehrung, beispielsweise umfassend Glas- und/oder Kunststoff- und/oder Kohlenstofffasern und/oder Glasfaser- und/oder Kunstfaser- und/oder Kohlenstofffasergewebe, und/oder einer Mikrobewehrung aufweisen. Eine Mikrobewehrung kann beispielsweise homogen verteilte, feine Kurzfasern (z.B. 6-24 mm lang und dünner als 50 Mikron) aufweisen. Das Teilringsegment kann vorgespannt ausgebildet sein und/oder zusammen mit weiteren Teilringsegmenten im Einbauzustand vorgespannt werden.

Das Teilringsegment kann ausgebildet und geeignet sein für verschiedene Turmquerschnitte, beispielsweise einen kreisförmigen oder einen vieleckigen oder polygonalen Querschnitt. Auch das Teilringsegment selbst kann eine im Querschnitt polygonale Form aufweisen.

Vorzugsweise umfasst das Teilringsegment eine Nut und/oder eine Feder, insbesondere zur Anordnung des Teilringsegments an einem weiteren Teilringsegment. Darüber hinaus kann das Teilringsegment eine, zwei oder mehrere Hülsen umfassen, die angeordnet und ausgebildet sind, eine Befestigung, insbesondere mit einer Schraubverbindung, des Teilringsegments mit einem, zwei oder mehreren weiteren Teilringsegmenten zu ermöglichen.

Beschrieben wird ferner ein Turm, insbesondere für eine Windenergieanlage, mit ringförmigen Turmabschnitten, umfassend eine Vielzahl an Teilringsegmenten, insbesondere Teilringsegmenten gemäß dem vorherigen Aspekt, die an mindestens einem im Wesentlichen vertikalen Stoß und an mindestens einem im Wesentlichen horizontalen Stoß aneinanderstoßen. Die vorzugsweise ringförmigen Turmabschnitte können Innen- und/oder Umfangsflächen mit rundem, und/oder ovalem, und/oder schlitzförmigem, und/oder dreieckigem, und/oder viereckigen und/oder mehreckigem Profil aufweisen. Darüber hinaus kann das Teilringsegment ausgebildet sein, für einen Gitterturm geeignet zu sein.

Beschrieben wird ferner eine Windenergieanlage umfassend einen Turm, insbesondere einen Turm gemäß dem vorherigen Aspekt, mit einem Querschnitt orthogonal zur Windenergieanlagen-Längserstreckung, wobei der Querschnitt im Wesentlichen rund, insbesondere kreisrund, und/oder eckig, insbesondere drei- und/oder mehreckig, ausgebildet ist.

Gemäß einem weiteren Aspekt der vorliegenden Erfindung wird die eingangs genannte Aufgabe gelöst durch ein Verfahren zur Herstellung eines Turms nach Anspruch 12.

Das erfindungsgemäße Verfahren und seine möglichen Fortbildungen weisen Merkmale bzw. Verfahrensschritte auf, die sie insbesondere dafür geeignet machen, für eine erfindungsgemäße Steigvorrichtung und ihre Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen der Steigvorrichtung verwiesen.

Bevorzugte Ausführungsformen der Erfindung werden beispielhaft anhand der beiliegenden Figuren erläutert. Es zeigen:
- Fig. 1:: eine schematische Darstellung einer beispielhaften Ausführungsform einer Windenergieanlage;
- Fig. 2:: eine schematische, dreidimensionale Darstellung einer beispielhaften Ausführungsform einer Steigvorrichtung;
- Fig. 3:: eine Detailansicht der Steigvorrichtung gemäß Fig. 2;
- Fig. 4:: eine schematische beispielhafte Anordnung einer Steigvorrichtung in einem Turm im Montagezustand;
- Fig. 5:: eine schematische beispielhafte Anordnung einer Steigvorrichtung in einem Turm.

In den Figuren sind gleiche oder im Wesentlichen funktionsgleiche oder. -ähnliche Elemente mit den gleichen Bezugszeichen bezeichnet.

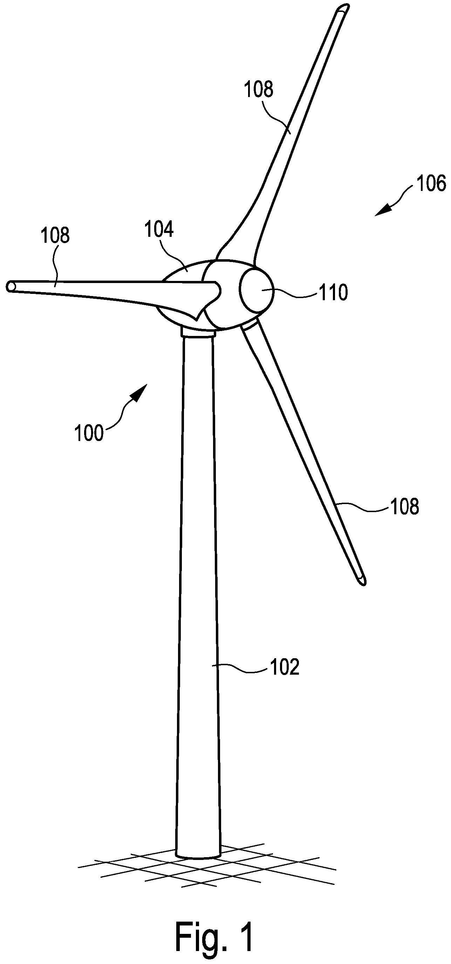

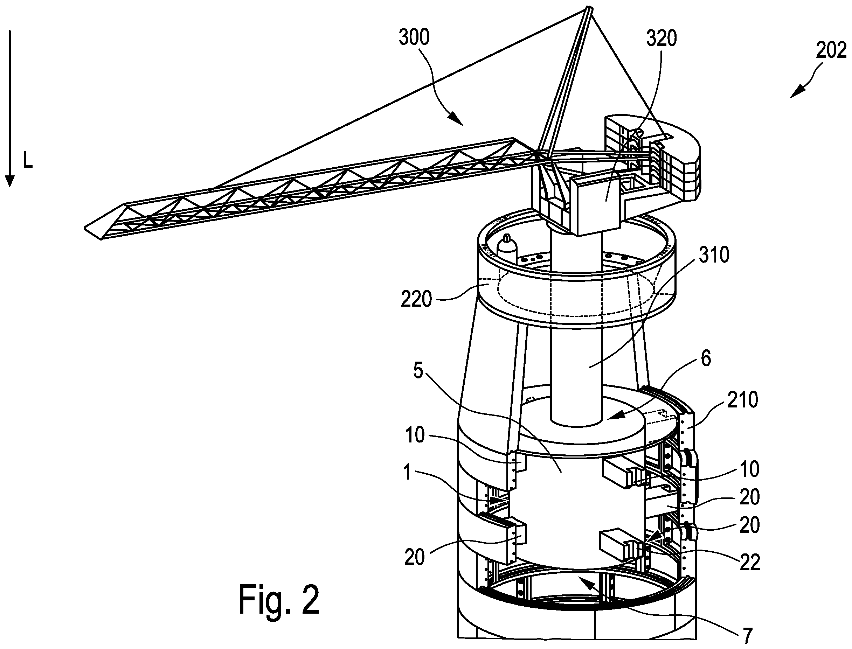

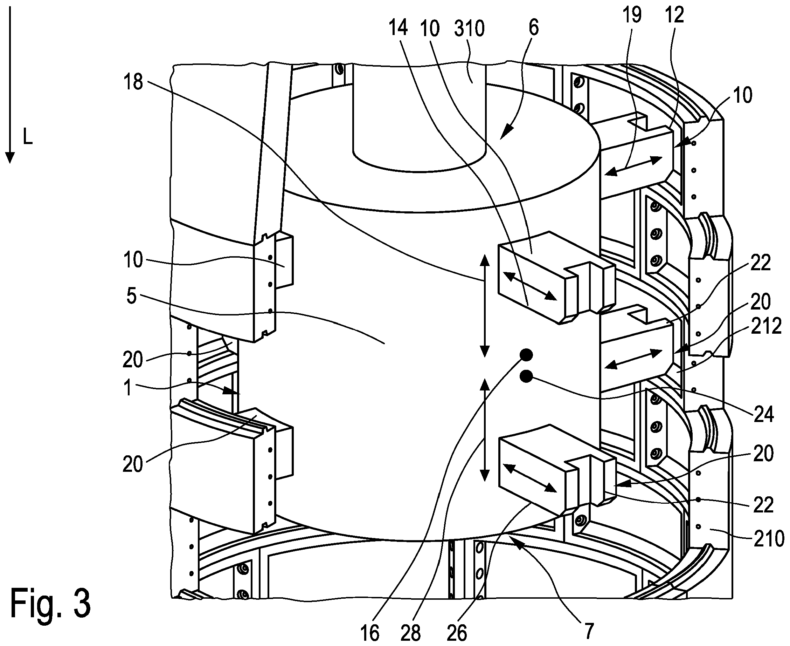

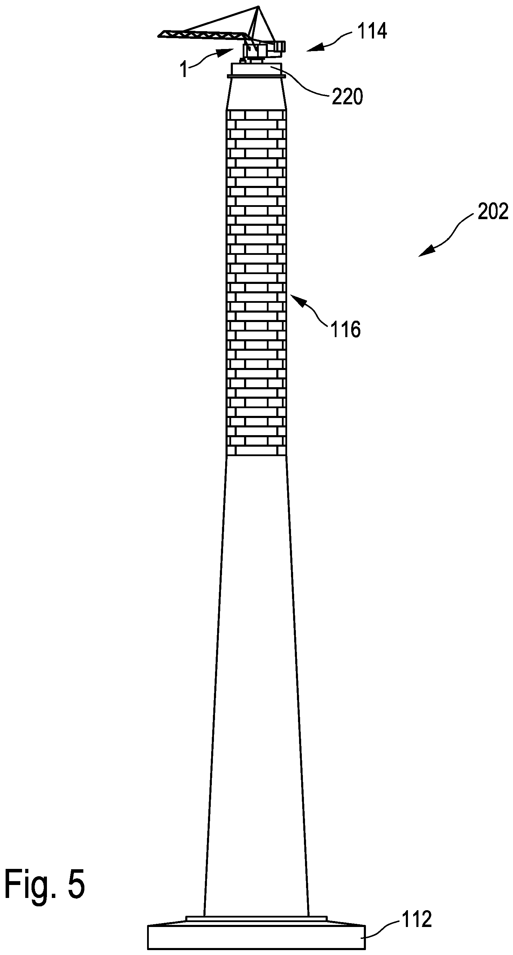

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Turm 102 ist vorzugsweise aus Segmenten, insbesondere aus Teilringsegmenten, zusammengesetzt. Ferner vorzugsweise sind diese Segmente aus Beton gefertigt oder umfassen Beton. Der Turm 102 wurde vorzugsweise unter anderem mit einer in den Figuren 2 bis 5 dargestellten Steigvorrichtung aufgebaut.

In den Figuren 2 bis 5 ist eine beispielhafte Ausführungsform einer Steigvorrichtung 1 im Betriebszustand gezeigt. Im Betriebszustand bedeutet hier insbesondere, dass die Steigvorrichtung 1 an bzw. innerhalb eines Turmes 202 angeordnet ist, um mit einer Hebevorrichtung 300 Teilringsegmente 210 in eine Montageposition zu bewegen. Die Steigvorrichtung 1 umfasst einen Grundkörper 5, der insgesamt vier erste Steigelemente 10 (lediglich drei gezeigt) und insgesamt vier zweite Steigelemente 20 aufweist. Der Grundkörper 5 erstreckt sich in Längsrichtung L von einem ersten Ende 6 zu einem zweiten Ende 7.

Orthogonal zur Längserstreckung des Grundkörpers 5 weist dieser einen Querschnitt auf, der eine kreisrunde Geometrie aufweist. Die ersten Steigelemente 10 sind in einem Bereich angrenzend an das erste Ende 6 angeordnet. In Längsrichtung L sind die ersten Steigelemente 10 jeweils gleich beabstandet von dem ersten Ende 6. Die benachbarten ersten Steigelemente 10 sind an der radialen Außenumfangsfläche des Grundkörpers 5 jeweils äquidistant angeordnet. Die zweiten Steigelemente 20 sind in einem Bereich angrenzend an das zweite Ende 7 angeordnet, wobei diese jeweils eine gleiche Beabstandung in Längsrichtung L von dem zweiten Ende 7 aufweisen. Darüber hinaus sind die benachbarten zweiten Steigelemente an der radialen Umfangsfläche des Grundkörpers 5 jeweils äquidistant angeordnet. Zwischen zwei ersten Steigelementen und zwischen zwei zweiten Steigelementen sind 90 Bogengrad Abstand. Die Steigelemente erstrecken sich von einem Halteende 12, 22 zu einem inneren Ende (nicht dargestellt), welches sich im Inneren des Grundkörpers 5 befindet.

Die zweiten Steigelemente 20 befinden sich vorliegend in einer Halteposition und stützen sich jeweils auf einem Absatz 212 von unterschiedlichen Teilringsegmenten 210 ab. Die zweiten Steigelemente 20 können in Längsrichtung mit einer zweiten Steigbewegung 28 zwischen einem zweiten oberen Umkehrpunkt 24 und einem zweiten unteren Umkehrpunkt 26 bewegt werden. Vorliegend befinden sich die zweiten Steigelemente 20 in einer Position des zweiten unteren Umkehrpunktes 26. Die ersten Steigelemente bewegen sich zwischen einem ersten oberen Umkehrpunkt 14 und einem ersten unteren Umkehrpunkt 16 mit einer ersten Steigbewegung 18.

Vorliegend sind die ersten Steigelemente 10 bereits in einer Halteposition, indem diese von einer Warteposition mit einer ersten Haltebewegung 19 in die Halteposition gefahren wurden. In einem nächsten Schritt können nun die ersten Steigelemente 10 von der derzeitigen Position am oberen Umkehrpunkt 14 in Längsrichtung hinuntergefahren werden zu einem unteren Umkehrpunkt 16 und somit den Grundkörper 5 relativ zum Turm 202 bewegen. Das Ausführungsbeispiel zeigt eine Bewegung der Steigelemente 10, 20, bei der eine Parallelverschiebung der Steigelemente 10, 20 erfolgt. Das heißt, dass die Steigelemente 10, 20 im Wesentlichen keine rotatorische Bewegung ausführen. In einer weiteren Ausführungsvariante können die Steigelemente 10, 20 auch oder im Wesentlichen ausschließlich eine rotatorische Bewegung ausführen, wobei die Rotationsachse vorzugsweise orthogonal zur Längsrichtung L angeordnet ist. Ferner vorzugsweise ist die Rotationsachse parallel zur einer Kante und/oder einer Tangente und/oder einer Sekante des Grundkörpers angeordnet. Durch die Rotation eines Steigelements 10, 20 um eine im Vorherigen erläuterte Rotationsachse, die von dem Halteende beabstandet ist, kann das Halteende eine Bewegung in Richtung der Längsrichtung ausführen.

An dem ersten Ende 6 der Steigvorrichtung 1 ist eine Hebevorrichtung 300 angeordnet, die ein Trägerelement 310 und einen Ausleger 320 umfasst. Das Trägerelement 310 weist eine zylinderförmige Geometrie auf, dessen Längsrichtung parallel zur Längserstreckung der Steigvorrichtung 1 ausgerichtet ist. Das Trägerelement 310 ist mit einem Ende an dem ersten Ende des Grundkörpers 6 angeordnet und an einem weiteren diesem gegenüberliegend angeordneten Ende ist der Ausleger 320 angeordnet. Mit der Steigvorrichtung 1 und der auf dieser angeordneten Hebevorrichtung 300 kann ein Turm 202 aufgebaut werden. Die Hebevorrichtung 300 kann insbesondere Teilringsegmente 210 aber auch weitere turmausbildende Elemente oder weitere Elemente vorzugsweise von einer Erdoberfläche in Richtung der Steigvorrichtung 1 befördern und hier an eine vorgesehene Montagestelle anordnen. An dieser Stelle kann die Montage des Teilringsegments 210 oder des weiteren Elements beispielsweise durch ein Verschrauben erfolgen.

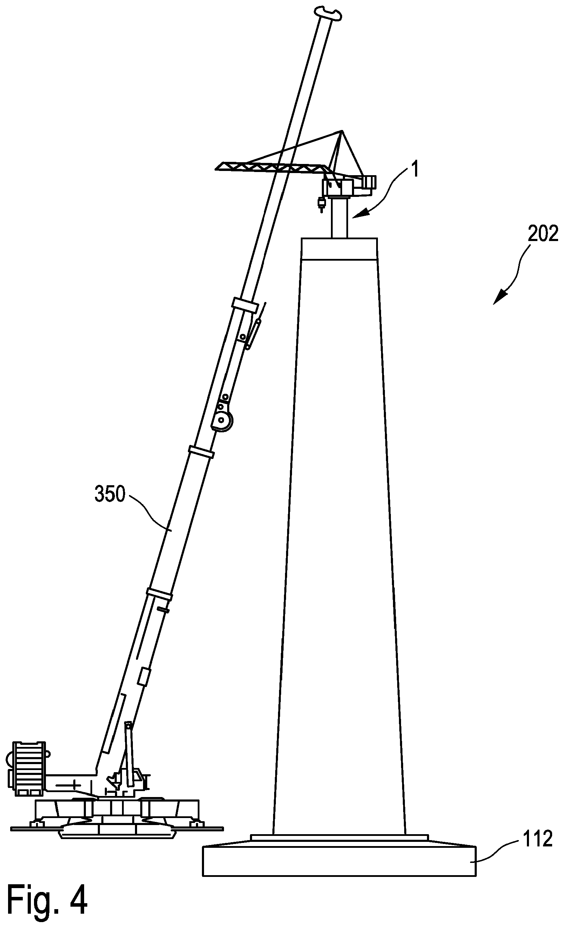

In Fig. 4 ist das Anordnen der Steigvorrichtung 1 an einem teilweise montierten Turm 202 gezeigt. Die Steigvorrichtung 1 wird mittels eines Mobilkrans 350 in bzw. auf dem Turm angeordnet. Von dort aus kann mittels der Hebevorrichtung 300 ein Anheben und Anordnen von Teilringsegmenten 210, die vorzugsweise im Umfeld des Fundaments 112 des Turms 202 zwischen gelagert sind, an dem teilweise montierten Turm 202 erfolgen. Nachdem der Turm im Wesentlichen vollständig montiert wurde und der Gondelflansch 220 als turmspitzenausbildendes Element angeordnet wurde, kann die Steigvorrichtung 1 mit der Hebevorrichtung 300 wieder vorzugsweise von einem Mobilkran 350 aus bzw. von dem Turm herausgehoben werden.

Durch die Steigvorrichtung 1 und die Hebevorrichtung 300 kann der Segmentbereich 116 des Turms 202 hergestellt werden. Die Segmente haben vorzugsweise ein derartiges Gewicht und derartige Abmessungen, dass diese keinen Schwertransport erfordern. Dadurch können diese in der Regel kostengünstig von einem Produktionsstandort zu einem Aufstellort des Turms 102, 202 transportiert werden. Darüber hinaus reduziert sich in der Regel der Planungsaufwand für die Schwertransporte. Darüber hinaus ist die Windenergieanlage 1 ohne einen großen Kran montierbar und es besteht in der Regel kein oder ein verminderter Bedarf an zusätzlichen Vorrichtungen auf der Baustelle. Darüber hinaus ergeben sich vorteilhafte Auswirkungen in der Konstruktion für derartige Türme 102, 202, da eine Standardisierung ermöglicht wird. Weiterhin ergeben sich Vorteile im Bereich der Produktion, da kleinere Werke notwendig sind, da die einzelnen Bestandteile kleinere Abmessungen und Einzelgewichte aufweisen. Ferner besteht die Möglichkeit einer Automatisierung der Produktion, die insbesondere auch wirtschaftlich gestaltet sein kann, und ferner ergibt sich, dass eine temporäre, baustellennahe Produktion relativ einfach aufzubauen ist. Darüber hinaus ist der Aufsteller bei der Montage des Turms 102, 202 weniger abhängig von äußeren Einflüssen, wie beispielsweise den Wetterverhältnissen, da die erfindungsgemäße Steigvorrichtung 1 und einer auf dieser angeordneten Hebevorrichtung 300 auch bei schlechteren Wetterverhältnissen noch funktionsfähig ist, als dies in der Regel bei großen mobilen Aufstellkränen derzeit der Fall ist.

### Bezugszeichen

- 1: Steigvorrichtung
- 5: Grundkörper
- 6: erstes Ende Grundkörper
- 7: zweites Ende Grundkörper
- 10: erste Steigelemente
- 12: erstes Halteende
- 14: erster oberer Umkehrpunkt
- 16: erster unterer Umkehrpunkt
- 18: erste Steigbewegung
- 19: erste Haltebewegung
- 20: zweite Steigelemente
- 22: zweites Halteende
- 24: zweiter oberer Umkehrpunkt
- 26: zweiter unterer Umkehrpunkt
- 28: zweite Steigbewegung
- 100: Windenergieanlage
- 102,202: Turm
- 104: Gondel
- 106: Rotor
- 108: Rotorblätter
- 110: Spinner
- 112: Fundament
- 114: Turmspitze
- 116: Segmentbereich
- 210: Teilringsegment
- 212: Absatz Teilringsegment
- 220: Gondelflansch
- 300: Hebevorrichtung
- 310: Trägerelement
- 320: Ausleger
- 350: Mobilkran
- L: Längsrichtung

## Patentansprüche

1. Steigvorrichtung (1) zur Ausführung einer Bewegung relativ zu einem Turm (102, 202), insbesondere einem Windenergieanlagen-Turm, umfassend
∘ einen Grundkörper (5) mit einer Längserstreckung von einem ersten Ende (6) zu einem zweiten Ende (7), wobei das zweite Ende in einem Betriebszustand einem Fundament (112) eines Turmes zugewandt ist,
∘ mindestens ein erstes Steigelement (10) mit einer Erstreckung zwischen einem ersten inneren Ende und einem ersten Halteende (12),
∘ mindestens ein zweites Steigelement (20) mit einer Erstreckung zwischen einem zweiten inneren Ende und einem zweiten Halteende (22), wobei
- das erste Steigelement angeordnet und ausgebildet ist,
∘ eine erste Haltebewegung (19) des ersten Halteendes relativ zum Grundkörper auszuführen, mit einer ersten Haltebewegungsrichtung orthogonal zur Längserstreckung, und
∘ eine erste Steigbewegung (18), insbesondere zur Bewegung der Steigvorrichtung relativ zu einem Turm, des ersten Halteendes relativ zum Grundkörper auszuführen, mit einer Steigbewegungsrichtung parallel zur Längserstreckung, und
- das zweite Steigelement angeordnet und ausgebildet ist,
∘ eine zweite Haltebewegung des zweiten Halteendes relativ zum Grundkörper auszuführen, mit einer zweiten Haltebewegungsrichtung orthogonal zur Längserstreckung, und/oder
∘ eine zweite Steigbewegung (28), insbesondere zur Bewegung der Steigvorrichtung relativ zu einem Turm, des zweiten Halteendes relativ zum Grundkörper auszuführen, mit einer Steigbewegungsrichtung parallel zur Längserstreckung,
- **gekennzeichnet durch** einen Sicherheitsmechanismus, wobei die erste Haltebewegung (19) des ersten Steigelements (10) lediglich möglich ist, wenn ein Bereich angrenzend an das zweite Halteende (22) des zweiten Steigelements (20) eine Verbindung mit einer, vorzugsweise inneren, Wandung eines Turms (102, 202) aufweist.

2. Steigvorrichtung (1) gemäß dem vorhergehenden Anspruch, wobei die Steigvorrichtung
- zwei oder mehrere erste Steigelemente (10) umfasst, und/oder
- zwei oder mehrere zweite Steigelemente (20) umfasst.

3. Steigvorrichtung (1) gemäß mindestens einem der vorhergehenden Ansprüche, wobei das mindestens eine erste Steigelement (10) einen ersten Antriebsbereich angrenzend an das erste innere Ende aufweist, wobei das erste innere Ende vorzugsweise in einem Inneren des Grundkörpers (5) angeordnet ist, und/oder das mindestens eine zweite Steigelement (20) einen zweiten Antriebsbereich angrenzend an das zweite innere Ende aufweist, wobei das zweite innere Ende vorzugsweise im Inneren des Grundkörpers angeordnet ist.

4. Steigvorrichtung (1) gemäß mindestens einem der vorhergehenden Ansprüche, wobei die Steigvorrichtung mindestens einen Antrieb aufweist, vorzugsweise einen hydraulischen Antrieb und/oder einen elektrischen Antrieb, der angeordnet und ausgebildet ist, das mindestens eine erste Steigelement (10), vorzugsweise am ersten Antriebsbereich, und/oder das mindestens eine zweite Steigelement (20), vorzugsweise am zweiten Antriebsbereich, in die Haltebewegungsrichtung und/oder die Steigbewegungsrichtung zu bewegen.

5. Steigvorrichtung (1) gemäß mindestens einem der vorhergehenden Ansprüche, wobei ein Bereich angrenzend an das erste Halteende (12) des mindestens einen ersten Steigelements (10) und/oder an das zweite Halteende (22) des mindestens einen zweiten Steigelements (20) angeordnet und ausgebildet ist, eine kraft- und/oder formschlüssige Verbindung mit einer, vorzugsweise inneren, Wandung eines Turms (102, 202) zu bilden.

6. Steigvorrichtung (1) gemäß mindestens einem der vorhergehenden Ansprüche, wobei
- die zwei oder mehreren ersten Steigelemente (10) jeweils die gleiche Beabstandung zu einem benachbarten ersten Steigelement in Umfangsrichtung aufweisen, und/oder
- die zwei oder mehreren zweiten Steigelemente (20) jeweils die gleiche Beabstandung zu einem benachbarten zweiten Steigelement in Umfangsrichtung aufweisen.

7. Steigvorrichtung (1) gemäß mindestens einem der vorhergehenden Ansprüche, wobei das mindestens eine erste Steigelement (10) ausgebildet ist, die erste Steigbewegung (18) und die erste Haltebewegung (19) zeitgleich auszuführen, und/oder das mindestens eine zweite Steigelement (20) ausgebildet ist, die zweite Steigbewegung (28) und die zweite Haltebewegung zeitgleich auszuführen.

8. Steigvorrichtung (1) gemäß mindestens einem der vorhergehenden Ansprüche, wobei die Steigvorrichtung, insbesondere der Antrieb, ausgebildet ist, die erste Steigbewegung (18) und/oder die zweite Steigbewegung (28) und/oder die erste Haltebewegung (19) und/oder die zweite Haltebewegung des mindestens einen ersten Steigelements (10) bzw. des mindestens einen zweiten Steigelements (20) jeweils unabhängig voneinander auszuführen.

9. Steigvorrichtung (1) gemäß mindestens einem der vorhergehenden Ansprüche, wobei die Haltebewegung des zweiten Steigelements lediglich möglich ist, wenn ein Bereich angrenzend an das erste Halteende (12) des ersten Steigelements eine Verbindung mit einer, vorzugsweise inneren, Wandung eines Turms aufweist.

10. Steigvorrichtung (1) gemäß mindestens einem der vorhergehenden Ansprüche, umfassend eine Steuervorrichtung, die angeordnet und ausgebildet ist, die Bewegung relativ zu einem Turm (102, 202), insbesondere einem Windenergieanlagen-Turm, zu steuern und vorzugsweise zu regeln, indem die erste Steigbewegung (18) und/oder die zweite Steigbewegung (28) und/oder die erste Haltebewegung (19) und/oder die zweite Haltebewegung des mindestens einen ersten Steigelements (10) bzw. des mindestens einen zweiten Steigelements (20), vorzugsweise in Bezug auf die Bewegungsbahn und/oder die Bewegungsgeschwindigkeit und/oder die Bewegungsbeschleunigungen, und ferner vorzugsweise zeitpunktabhängig, bestimmt wird bzw. werden.

11. Steigvorrichtung (1) gemäß mindestens einem der vorhergehenden Ansprüche, wobei die Steigvorrichtung eine Hebevorrichtung (300) umfasst, wobei die Hebevorrichtung vorzugsweise am ersten Ende (6) des Grundkörpers (5) angeordnet ist.

12. Verfahren zur Herstellung eines Turms (102, 202), umfassend die Schritte
- Anordnen einer Steigvorrichtung (1) gemäß mindestens einem der Ansprüche 1-11, innerhalb eines Turms oder auf einem Turm; und
- Abstützen der Steigvorrichtung an einer Wandung des Turms, vorzugsweise an mindestens einem Absatz (212) eines Teilringsegments (210), mit dem mindestens einen ersten Steigelement (10) in einer Halteposition und/oder mit dem mindestens einen zweiten Steigelement (20) in einer Halteposition; und
- Anordnen von einem, zwei oder mehreren Teilringsegmenten,
- wobei mindestens ein Teilringsegment als Mantelsegment ausgebildet ist und einen Absatz, vorzugsweise mit mindestens einer im Betriebszustand im Wesentlichen horizontalen Fläche, aufweist, der als eine Kraftangriffsfläche für ein Steigelement (10, 20) der Steigvorrichtung (1) ausgebildet ist; und
- Aufsteigen der Steigvorrichtung durch eine erste Steigbewegung (18) des ersten Halteendes (12) des mindestens einen ersten Steigelements in Richtung des zweiten Endes (7), und/oder durch eine zweite Steigbewegung (28) des zweiten Halteendes (22) des mindestens einen zweiten Steigelements in Richtung des zweiten Endes.

## Claims

1. A climbing device (1) for carrying out a movement relative to a tower (102, 202), in particular a wind power installation tower, comprising
∘ a main body (5) having a longitudinal extent from a first end (6) to a second end (7), wherein the second end in an operating state faces a foundation (112) of a tower;
∘ at least one first climbing element (10) having an extent between a first inner end and a first holding end (12);
∘ o at least one second climbing element (20) having an extent between a second inner end and a second holding end (22); wherein
- the first climbing element is disposed and configured for
∘ carrying out a first holding movement (19) of the first holding end relative to the main body, by way of a first holding movement direction that is orthogonal to the longitudinal extent; and
∘ carrying out a first climbing movement (18), in particular for moving the climbing device relative to a tower, of the first holding end relative to the main body, by way of a climbing movement direction that is parallel with the longitudinal extent; and
- the second climbing element is disposed and configured for
∘ carrying out a second holding movement of the second holding end relative to the main body, by way of a second holding movement direction that is orthogonal to the longitudinal extent; and/or
∘ carrying out a second climbing movement (28), in particular for moving the climbing device relative to a tower, of the second holding end relative to the main body, by way of a climbing movement direction that is parallel with the longitudinal extent,
**characterized by** a safety mechanism, wherein the first holding movement (19) of the first climbing element (10) is possible only when a region adjacent to the second holding end (22) of the second climbing element (20) is connected to a preferably inner wall of a tower (102, 202).

2. The climbing device (1) as claimed in the preceding claim, wherein the climbing device
- comprises two or a plurality of climbing elements (10); and/or
- comprises two or a plurality of second climbing elements (20).

3. The climbing device (1) as claimed in at least one of the preceding claims, wherein the at least one first climbing element (10) has a first drive region adjacent to the first inner end, wherein the first inner end is preferably disposed in an interior of the main body (5), and/or the at least one second climbing element (20) has a second drive region adjacent to the second inner end, wherein the second inner end is preferably disposed in the interior of the main body.

4. The climbing device (1) as claimed in at least one of the preceding claims, wherein the climbing device has at least one drive, preferably a hydraulic drive and/or an electric drive, which is disposed and configured for moving the at least one first climbing element (10), preferably at the first drive region, and/or the at least one second climbing element (20), preferably at the second drive region, in the holding movement direction and/or the climbing movement direction.

5. The climbing device (1) as claimed in at least one of the preceding claims, wherein a region adjacent to the first holding end (12) of the at least one first climbing element (10) and/or the second holding end (22) of the at least one second climbing element (20) is disposed and configured for forming a force-fitting and/or form-fitting connection to a preferably inner wall of a tower (102, 202).

6. The climbing device (1) as claimed in at least one of the preceding claims, wherein
- the two or plurality of first climbing elements (10) in the circumferential direction have in each case the same spacing from a neighboring first climbing element; and/or
- the two or plurality of second climbing elements (20) in the circumferential direction have in each case the same spacing from a neighboring second climbing element.

7. The climbing device (1) as claimed in at least one of the preceding claims, wherein the at least one first climbing element (10) is configured for simultaneously carrying out the first climbing movement (18) and the first holding movement (19); and/or the at least one second climbing element (20) is configured for simultaneously carrying out the second climbing movement (28) and the second holding movement.

8. The climbing device (1) as claimed in at least one of the preceding claims, wherein the climbing device, in particular the drive, is configured for carrying out in each case in a mutually independent manner the first climbing movement (18) and/or the second climbing movement (28) and/or the first holding movement (19) and/or the second holding movement of the at least one first climbing element (10), or of the at least one second climbing element (20), respectively.

9. The climbing device (1) as claimed in at least one of the preceding claims, wherein the holding movement of the second climbing element is possible only when a region adjacent to the first holding end (12) of the first climbing element is connected to a preferably inner wall of a tower.

10. The climbing device (1) as claimed in at least one of the preceding claims, comprising a control device which is disposed and configured for controlling in an open loop and preferably in a closed loop the movement relative to a tower (102, 202), in particular a wind power installation tower, in that the first climbing movement (18) and/or the second climbing movement (28) and/or the first holding movement (19) and/or the second holding movement of the at least one first climbing element (10), or of the at least one second climbing element (20), are/is preferably determined in relation to the movement path and/or the movement speed and/or the movement accelerations, and furthermore so as to depend on a temporal point.

11. The climbing device (1) as claimed in at least one of the preceding claims, wherein the climbing device comprises a lifting device (300), wherein the lifting device is preferably disposed on the first end (6) of the main body (5).

12. A method for producing a tower (102, 202), comprising the following method steps:
- disposing a climbing device (1) as claimed in at least one of claims 1 to 11, within a tower or on a tower; and
- supporting the climbing device on a wall of the tower, preferably on at least one step (212) of a part-ring segment (210), the at least one first climbing element (10) being in a holding position and/or the at least one second climbing element (20) being in a holding position; and
- disposing one, two, or a plurality of part-ring segments,
- wherein at least one part-ring segment is configured as an envelope segment and has a step, preferably having at least one face that in the operating state is substantially horizontal, said step being configured as a force-engagement face for a climbing element (10, 20) of a climbing device (1); and
- ascending the climbing device by a first climbing movement (18) of the first holding end (12) of the at least one first climbing element in the direction of the second end (7), and/or by a second climbing movement (28) of the second holding end (22) of the at least one second climbing element in the direction of the second end.

## Revendications

1. Dispositif de montée (1) pour la réalisation d'un mouvement par rapport à un mât (102, 202), en particulier un mât d'éolienne, comprenant
o un corps de base (5) avec une étendue longitudinale à partir d'une première extrémité (6) vers une deuxième extrémité (7), dans lequel la deuxième extrémité dans un état de fonctionnement est tournée vers une base (112) d'un mât,
o au moins un premier élément de montée (10) avec une étendue entre une première extrémité intérieure et une première extrémité de retenue (12),
o au moins un deuxième élément de montée (20) avec une étendue entre une deuxième extrémité intérieure et une deuxième extrémité de retenue (22), dans lequel
- le premier élément de montée est disposé et réalisé
o pour exécuter un premier mouvement de retenue (19) de la première extrémité de retenue par rapport au corps de base, avec une première direction de mouvement de retenue perpendiculaire à l'étendue longitudinale, et
o un premier mouvement de montée (18), en particulier pour le mouvement du dispositif de montée par rapport à un mât, de la première extrémité de retenue par rapport au corps de base, avec une direction de mouvement de montée parallèle à l'étendue longitudinale, et
- le deuxième élément de montée est disposé et réalisé
o pour exécuter un deuxième mouvement de retenue de la deuxième extrémité de retenue par rapport au corps de base, avec une deuxième direction de mouvement de retenue perpendiculaire à l'étendue longitudinale, et/ou
o un deuxième mouvement de montée (28), en particulier pour le mouvement du dispositif de montée par rapport à un mât, de la deuxième extrémité de retenue par rapport au corps de base, avec une direction de mouvement de montée parallèle à l'étendue longitudinale,
- **caractérisé par** un mécanisme de sécurité, dans lequel le premier mouvement de retenue (19) du premier élément de montée (10) n'est possible que lorsqu'une zone adjacente à la deuxième extrémité de retenue (22) du deuxième élément de montée (20) présente une liaison avec une paroi, de préférence intérieure, d'un mât (102, 202) .

2. Dispositif de montée (1) selon la revendication précédente, dans lequel le dispositif de montée
- comprend deux premiers éléments de montée (10) ou plus, et/ou
- comprend deux deuxièmes éléments de montée (20) ou plus.

3. Dispositif de montée (1) selon au moins l'une des revendications précédentes, dans lequel le au moins un premier élément de montée (10) présente une première zone d'entraînement adjacente à la première extrémité intérieure, dans lequel la première extrémité intérieure est disposée de préférence dans un intérieur du corps de base (5), et/ou le au moins un deuxième élément de montée (20) présente une deuxième zone d'entraînement adjacente à la deuxième extrémité intérieure, dans lequel la deuxième extrémité intérieure est disposée de préférence dans l'intérieur du corps de base.

4. Dispositif de montée (1) selon au moins l'une des revendications précédentes, dans lequel le dispositif de montée présente au moins un entraînement, de préférence un entraînement hydraulique et/ou un entraînement électrique, qui est disposé et réalisé pour déplacer le au moins un premier élément de montée (10), de préférence sur la première zone d'entraînement, et/ou pour déplacer le au moins un deuxième élément de montée (20), de préférence sur la deuxième zone d'entraînement, dans la direction de mouvement de retenue et/ou la direction de mouvement de montée.

5. Dispositif de montée (1) selon au moins l'une des revendications précédentes, dans lequel une zone adjacente à la première extrémité de retenue (12) du au moins un premier élément de montée (10) et/ou à la deuxième extrémité de retenue (22) du au moins un deuxième élément de montée (20) est disposée et réalisée pour former une liaison à force et/ou par coopération de formes avec une paroi, de préférence intérieure, d'un mât (102, 202).

6. Dispositif de montée (1) selon au moins l'une des revendications précédentes, dans lequel
- les deux premiers éléments de montée (10) ou plus présentent respectivement le même espacement par rapport à un premier élément de montée voisin dans la direction périphérique, et/ou
- les deux deuxièmes éléments de montée (20) ou plus présentent respectivement le même espacement par rapport à un deuxième élément de montée voisin dans la direction périphérique.

7. Dispositif de montée (1) selon au moins l'une des revendications précédentes, dans lequel le au moins un premier élément de montée (10) est réalisé pour exécuter le premier mouvement de montée (18) et le premier mouvement de retenue (19) simultanément, et/ou le au moins un deuxième élément de montée (20) est réalisé pour exécuter le deuxième mouvement de montée (28) et le deuxième mouvement de retenue simultanément.

8. Dispositif de montée (1) selon au moins l'une des revendications précédentes, dans lequel le dispositif de montée, en particulier l'entraînement, est réalisé pour exécuter le premier mouvement de montée (18) et/ou le deuxième mouvement de montée (28) et/ou le premier mouvement de retenue (19) et/ou le deuxième mouvement de retenue du au moins un premier élément de montée (10) ou du au moins un deuxième élément de montée (20) respectivement indépendamment l'un de l'autre.

9. Dispositif de montée (1) selon au moins l'une des revendications précédentes, dans lequel le mouvement de retenue du deuxième élément de montée n'est possible que lorsqu'une zone adjacente à la première extrémité de retenue (12) du premier élément de montée présente une liaison avec une paroi, de préférence intérieure, d'un mât.

10. Dispositif de montée (1) selon au moins l'une des revendications précédentes, comprenant un dispositif de commande, qui est disposé et réalisé pour commander et de préférence pour réguler le mouvement par rapport à un mât (102, 202), en particulier un mât d'éolienne, du fait que le premier mouvement de montée (18) et/ou le deuxième mouvement de montée (28) et/ou le premier mouvement de retenue (19) et/ou le deuxième mouvement de retenue du au moins un premier élément de montée (10) ou du au moins un deuxième élément de montée (20), est ou sont déterminés de préférence par rapport à la trajectoire de mouvement et/ou la vitesse de mouvement et/ou les accélérations de mouvement, et en outre de préférence en fonction du moment.

11. Dispositif de montée (1) selon au moins l'une des revendications précédentes, dans lequel le dispositif de montée comprend un dispositif de levage (300), dans lequel le dispositif de levage est disposé de préférence sur la première extrémité (6) du corps de base (5).

12. Procédé pour la fabrication d'un mât (102, 202), comprenant les étapes
- de disposition d'un dispositif de montée (1) selon au moins l'une des revendications 1-11, à l'intérieur d'un mât ou sur un mât ; et
- d'appui du dispositif de montée sur une paroi du mât, de préférence sur au moins une saillie (212) d'un segment d'anneau partiel (210), avec le au moins un premier élément de montée (10) dans une position de retenue et/ou avec le au moins un deuxième élément de montée (20) dans une position de retenue ; et
- de disposition d'un, deux segments d'anneau partiel ou plus,
- dans lequel au moins un segment d'anneau partiel est réalisé en tant que segment d'enveloppe et présente une saillie, de préférence avec au moins une surface sensiblement horizontale dans l'état de fonctionnement, qui est réalisée en tant que surface d'application de force pour un élément de montée (10, 20) du dispositif de montée (1) ; et
- de montée au dispositif de montée par un premier mouvement de montée (18) de la première extrémité de retenue (12) du au moins un premier élément de montée en direction de la deuxième extrémité (7), et/ou par un deuxième mouvement de montée (28) de la deuxième extrémité de retenue (22) du au moins un deuxième élément de montée en direction de la deuxième extrémité.
